# EUROPÄISCHE PATENTANMELDUNG

(11) **EP 3 854 515 A1**
(43) Veröffentlichungstag der Anmeldung: **28.07.2021**
(21) Anmeldenummer: 20213827.7
(22) Anmeldetag: 14.12.2020
(51) Int. Cl.: B23K 26/38, B23K 26/402, B23K 26/0622, B23K 26/073, B23K 26/082, B23K 26/53, C03B 33/09, B23K 103/00

(54) **VERFAHREN ZUR BEARBEITUNG SPRÖDHARTER MATERIALIEN**

(30) Priorität: 03.01.2020 DE 102020100051
(71) Anmelder: SCHOTT AG, 55122 Mainz (DE)
(72) Erfinder: HUNZIGER, Bernhard, 55263 Wackernheim (DE); AL-ZUHAIRI, Ali, 65428 Rüsselsheim (DE); ORTNER, Andreas, 55435 Gau-Algesheim (DE); KOGLBAUER, Andreas, 65468 Trebur (DE); ADRIAN, Imke, 65428 Rüsselsheim (DE)
(74) Vertreter: Blumbach · Zinngrebe Patentanwälte PartG mbB

(57) **Zusammenfassung**

Verfahren zum trennenden Bearbeiten von sprödharten Materialien, bei welchem die Oberfläche eines Werkstücks (1) aus sprödhartem Material mit einem Laserstrahl (3) bestrahlt wird, wobei die Wellenlänge des Laserstrahls (3) so gewählt wird, dass das Licht an der Oberfläche (5) des Werkstücks (1) absorbiert wird, so dass das Werkstück (1) an der Oberfläche (5) erhitzt wird und sich ein Temperaturgradient in Richtung von der Oberfläche (5) in das Innere des Werkstücks (1) ausbildet, wobei der Laserstrahl (3) über die Oberfläche (5) des Werkstücks (1) geführt wird, und wobei ein weiterer Temperaturgradient entlang der Oberfläche (5) zwischen einem bestrahlten Bereich (7) und einem benachbarten unbestrahlten Bereich (9) entsteht, wobei die beiden Temperaturgradienten so zusammenwirken, dass sich aufgrund der durch die Temperaturgradienten verursachten thermomechanischen Spannungen das Werkstück unterhalb der Oberfläche (5) auftrennt und ein Teil (11) des Werkstücks (1), insbesondere in Form eines Spans, abgetrennt wird.

## Beschreibung

Die Erfindung betrifft allgemein die Verarbeitung von Erzeugnissen aus sprödharten Materialien, wie Glas oder Glaskeramik. Im Speziellen betrifft die Erfindung die trennende Bearbeitung sprödharter Materialien durch Materialabnahme.

Die US 2018/0141154 A1 beschreibt ein Verfahren und eine Vorrichtung zum Anfasen von Werkstückkanten. Dabei wird mit einem Ultrakurzpulslaser ein Laserstrahl schräg auf die Kante des zu bearbeitenden Werkstücks gerichtet, um schräg in der Kante liegende Laserfilamente zu erzeugen. Der Laser wird durch ein transparentes Element mit einer schrägen Oberfläche hindurch in das Werkstück eingestrahlt, um den Einfallswinkel am Werkstück zu erhöhen.

Ein weiteres Verfahren zum Anfasen von Glaselementen durch Laserbearbeitung ist aus der US 2010/0147813 A1 bekannt. Das Verfahren basiert darauf, mit dem Laser durch Ablation schräg verlaufende Gräben im Glas zu erzeugen. Die Ablation ist allerdings ein sehr langsames Verfahren, wenn größere Schnitttiefen eingefügt werden sollen.

Ein weiteres trennendes Bearbeitungsverfahren ist auch allgemein das Ätzen von Glas. Dies erfordert allerdings den Einsatz aggressiver Ätzmedien, ist ebenfalls langsam und ohne weitere Vorkehrungen, wie etwa durch Maskieren, auch nicht ortsaufgelöst.

Der Erfindung liegt daher die Aufgabe zugrunde, die trennende Bearbeitung sprödharter Materialien, wie insbesondere von Glas oder Glaskeramik, bei hoher Genauigkeit zu vereinfachen und zu beschleunigen.

Diese Aufgabe wird durch den Gegenstand der unabhängigen Ansprüche gelöst. Vorteilhafte Weiterbildungen sind in den jeweiligen abhängigen Ansprüchen angegeben.

Demgemäß sieht die Erfindung ein Verfahren zum trennenden Bearbeiten von sprödharten Materialien vor, bei welchem die Oberfläche eines Werkstücks aus sprödhartem Material mit einem Laserstrahl bestrahlt wird, wobei die Wellenlänge des Laserstrahl so gewählt wird, dass das Licht an der Oberfläche des Werkstücks absorbiert wird, so dass das Werkstück an der Oberfläche erhitzt wird und sich ein Temperaturgradient in Richtung von der Oberfläche in das Innere des Werkstücks ausbildet, wobei der Laserstrahl über die Oberfläche des Werkstücks geführt wird, und wobei ein weiterer Temperaturgradient entlang der Oberfläche zwischen einem bestrahlten Bereich und einem benachbarten unbestrahlten Bereich entsteht, wobei die beiden Temperaturgradienten so zusammenwirken, dass sich aufgrund der durch die Temperaturgradienten verursachten thermomechanischen Spannungen das Werkstück unterhalb der Oberfläche auftrennt und ein Teil des Werkstücks, insbesondere in Form eines Spans, abgetrennt wird. Das Verfahren stellt also ähnlich wie in der Metallbearbeitung üblich ein spanabhebendes Bearbeitungsverfahren dar und wird in Anlehnung daran hierin auch als Zerspanungsverfahren bezeichnet. Dabei ist die Art und Weise, wie der Span abgetrennt wird, aber völlig anders als bei der Bearbeitung duktiler Metalle mit mechanischen, in das Metall schneidenden Werkzeugen. Mit der schnellen schockartigen oberflächlichen Aufheizung werden oberflächennahe Spannungen erzeugt, die zum Absprengen eines Spans, beziehungsweise allgemeiner eines Teils des Werkstücks führen. Das Verfahren kann daher auch als eine Thermo-Schock-Zerspanung angesehen werden.

Das Verfahren ist eine erstaunlich einfache Art, derartige sprödharte Werkstoffe zu bearbeiten. Als sprödhartes Material wird dabei ein hartes Material verstanden, welches im Gegensatz zu Metallen nicht duktil ist. Demgemäß lässt sich ein sprödhartes Material nicht dauerhaft verformen, sondern bricht. Auch ist die Bruchbelastung typischerweise nicht fest definiert, sondern folgt einer Wahrscheinlichkeitsverteilung. Gerade diese Eigenschaften machen eine spanabhebende Bearbeitung schwierig bis unmöglich, da es sehr schnell zum Bruch des Werkstücks kommt. Mit der Erfindung werden diese Schwierigkeiten umgangen.

Zwar sind Verfahren bekannt, bei welchen es durch einen Laser zu thermomechanischen Spannung kommt und ein Werkstück getrennt wird, beispielsweise ein Verfahren nach US 2019/0300417 A1. Bei solchen Verfahren allerdings ist es notwendig, dass entlang der Verlaufslinie des Lasers bzw. des Laserstrahls Vorschädigungen, beispielsweise in Form von Filamenten, vorliegen. Diese Vorschädigungen sind also notwendig für das in US 2019/0300417 A1 beschriebene Verfahren. Das dort beschrieben Verfahren erfolgt mithin zweischrittig. Mit dem Verfahren nach der vorliegenden Anmeldung ist hingegen vorgesehen, dass rein auf thermische Einwirkung eines Laserstrahls und der beschriebenen Ausbildung von Temperaturgradienten sowie deren spezifischem Zusammenwirken. Insbesondere kann das Verfahren ohne einen zusätzlichen ersten Schritt wie dem Einbringen von Vorschädigungen erfolgen. Darüber hinaus beschreibt US 2019/0300417 A1 auch ein Trennverfahren, keine spanende Nachbearbeitung eines Werkstücks.

Als besonders bevorzugte sprödharte Werkstoffe kommen für das Werkstück Glas oder Glaskeramik in Betracht. Das Verfahren ist sogar geeignet, besonders schwierig zu bearbeitende Gläser und Glaskeramiken zu zerspanen. So ist gemäß einer Ausführungsform vorgesehen, dass das Material des Werkstücks, welches mit dem Verfahren bearbeitet wird, eine Glaskeramik mit einem Temperaturausdehnungskoeffizienten α₂₀₋₆₀₀ von höchstens 2·10⁻⁶ K⁻¹ ist. Hierbei ist es erstaunlich, dass sich in einem solchen niedrigdehnenden Werkstoff durch das Aufheizen überhaupt eine hinreichend große thermomechanische Spannung aufbauen lässt. In gleicher Weise können auch niedrigdehnende Gläser, wie etwa sogenannte ULE-Gläser (ULE="Ultra Low Expansion"), beziehungsweise Titan-Silikatgläser bearbeitet werden.

Gemäß einer weiteren Ausführungsform ist das Material des Werkstücks ein thermisch vorgespanntes Glas. Derartige Gläser sind besonders schwierig, sogar im Allgemeinen unmöglich nach dem Vorspannen mechanisch bearbeitbar. Mit dem Verfahren können hingegen auch an thermisch vorgespannten Gläsern Späne abgehoben werden, ohne dass das Glas reißt.

Eine besonders bevorzugte Anwendung des Verfahrens ist die Bearbeitung der Kanten von scheibenförmigen Werkstücken. Demgemäß ist in einer Ausführungsform vorgesehen, dass das Werkstück eine Kante aufweist, wobei der Laserstrahl an der Kante entlanggeführt wird, so dass durch das Ablösen des Teils eine Fase an der Kante gebildet wird.

Es besteht auch die Möglichkeit, Flächen spanabhebend zu bearbeiten. Dazu ist in einer alternativen oder zusätzlichen Ausführungsform des Verfahrens vorgesehen, dass der Lichtstrahl über die Oberfläche, also beispielsweise über eine Seitenfläche des Werkstücks, geführt und in die Oberfläche auf diese Weise durch Ablösen des Teils eine Vertiefung erzeugt wird.

Die Erfindung wird nachfolgend genauer und anhand der Figuren und Ausführungsbeispiele näher erläutert.

### Kurzbeschreibung der Figuren:

Fig. 1 zeigt eine Anordnung zum Anfasen der Kante einer Glasplatte.
Fig. 2 zeigt ein Intensitätsprofil eines Laserstrahls.
Fig. 3 zeigt eine Anordnung zum Einfügen von Vertiefungen.
Fig. 4 stellt ein bearbeitetes Werkstück in Form eines Rohres dar.
Fig. 5 zeigt eine mit dem Verfahren bearbeitete Bedienblende.
Fig. 6 zeigt ein Diagramm des Temperatur-Zeit-Verlaufs an einer vom Lichtstrahl überstrichenen Position auf dem Werkstück.
Fig. 7 zeigt ein Beispiel einer Bewegung des Laserstrahls über das Werkstück.
Fig. 8 zeigt ein Ausführungsbeispiel eines Pfads der Bewegung des Laserstrahls auf dem Werkstück.
Fig. 9 und Fig. 11 zeigen mikroskopische Aufnahmen der Kante eines Werkstücks mit einer Fase.
Fig. 10 stellt eine Anordnung zum Einfügen einer Trennlinie für das Herausarbeiten eines Werkstücks dar.
Fig. 12 zeigt die Bestrahlung eines Werkstücks mit einem Laserstrahl mit einem besonderen Strahlprofil.
Fig. 13 zeigt das mit dem Laserstrahl gemäß Fig. 12 bestrahlte Werkstück.

### Ausführliche Beschreibung der Erfindung

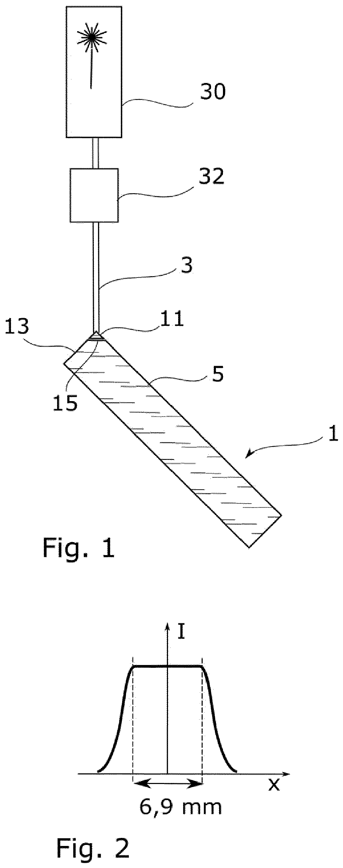

In Fig. 1 ist eine Anordnung zum trennenden Bearbeiten von sprödharten Materialien, insbesondere von Werkstücken 1 aus Glas oder Glaskeramik dargestellt. Im Speziellen kann mit der Anordnung eine Kante 13 des Werkstücks 1 bearbeitet werden, um an der Kante 13 eine Fase zu bilden. Zur Bearbeitung wird die Oberfläche des Werkstücks 1 mit einem Laserstrahl 3 bestrahlt, wobei die Wellenlänge des Laserstrahls 3 so gewählt wird, dass das Licht an der Oberfläche 5 des Werkstücks 1 absorbiert wird. Dadurch erhitzt sich das Werkstück 1 an der Oberfläche 5 und es bildet sich ein Temperaturgradient in Richtung von der Oberfläche 5 in das Innere des Werkstücks 1 aus. Um einen starken Temperaturgradienten an der Oberfläche zu erzeugen, ist es günstig, wenn das Licht auch direkt an der Oberfläche des Werkstücks absorbiert wird. Allgemein, ohne Beschränkung auf die dargestellten Ausführungsbeispiele ist es dazu bevorzugt, wenn der Lichtstrahl eine Wellenlänge von mindestens 4,5 µm aufweist.

Um eine hinreichende lokale Heizleistung zu erzeugen, wird als Laser 30 besonders bevorzugt ein CO₂-Laser oder ein CO-Laser verwendet. Ein CO₂-Laser kann hohe Laserleistungen bereitstellen und mit einer Laserwellenlänge betrieben werden, die zu einer nahezu vollständigen und oberflächlichen Absorption des Laserstrahls im Material des Werkstücks 1 führt. Gemäß einer Ausführungsform wird der CO₂-Laser mit einer Wellenlänge von 10,6 µm betrieben. Gemäß einer weiteren Ausführungsform wird ein CO-Laser, beziehungsweise Kohlenmonoxidlaser verwendet. Dieser kann beispielsweise mit einer Wellenlänge von 5,5 µm betrieben werden. Die kürzere Wellenlänge führt zu einer größeren Eindringtiefe des Lichts und dementsprechend zu einer tiefergehenden Aufheizung des Werkstücks 1.

Der Laserstrahl 3 wird zur trennenden Bearbeitung über die Oberfläche 5 des Werkstücks 1 geführt. Dabei wird ein weiterer Temperaturgradient entlang der Oberfläche 5 zwischen einem bestrahlten Bereich 7 und einem benachbarten unbestrahlten Bereich 9 hervorgerufen, der mit dem Auftreffpunkt des Lichtstrahls 3 mitwandert. Dabei wirken die beiden Temperaturgradienten so zusammen, dass sich aufgrund der durch die Temperaturgradienten verursachten thermomechanischen Spannungen das Werkstück unterhalb der Oberfläche 5 auftrennt und ein Teil 11 des Werkstücks 1, insbesondere in Form eines Spans, abgetrennt wird. Im Falle der Kantenbearbeitung, wie sie in Fig. 1 dargestellt ist, wird der Lichtstrahl 3 an der Kante 13 entlanggeführt wird, so dass durch das Ablösen des Teils 11 eine Fase 15 an der Kante 13 gebildet wird. Um das spanförmige Teil 11 abzutrennen, wird der Lichtstrahl 3 schräg auf die Kante 13 eingestrahlt, so dass dieser auf die Ecke zwischen der Kante 13 und der Seitenfläche 6 des hier scheibenförmigen Werkstücks 1 trifft.

Um den Lichtstrahl 3 die Kante 13 entlang zu führen, ist ein Scanner 32 vorgesehen. Beispielsweise kann der Scanner 32 als Galvanometer-Scanner ausgebildet sein. Insbesondere kann der Scanner 32 auch eine F-Θ-Linse umfassen, beziehungsweise ein F-Θ-Scanner sein. Es ist dem Fachmann ersichtlich, dass es für das Verfahren aber auf die Relativbewegung zwischen dem Lichtstrahl 3 und dem Werkstück 1 ankommt. Demnach ist es auch ebenso möglich, das Werkstück 1 am Lichtstrahl 3 vorbeizubewegen.

Fig. 2 zeigt ein Strahlprofil eines Laserstrahls 3 (vgl. Fig. 1), wie er für die trennende Bearbeitung, insbesondere auch für das Anfasen einer Kante eines Werkstücks, geeignet ist. Der Laserstrahl hat im Wesentlichen ein sogenanntes Top-Hat-Profil mit einem Strahldurchmesser von etwa 7 mm. Generell sind Lichtstrahlen mit einem Strahldurchmesser im Bereich von 1, vorzugsweise 2, bis 20 Millimetern, vorzugsweise im Bereich von 1 bis 15 Millimetern oder besonders bevorzugt von 5 bis 15 Millimetern besonders geeignet.

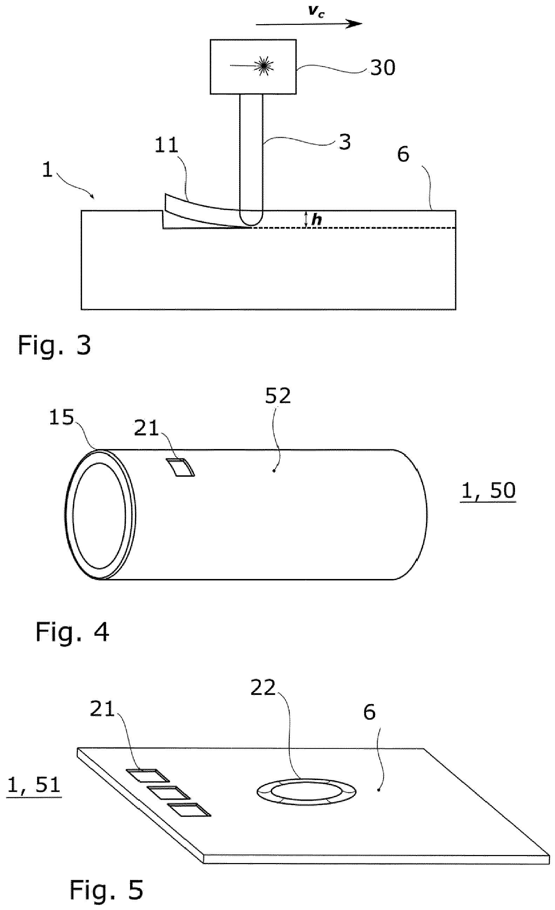

Anhand des Beispiels der Fig. 1 wurde die Bearbeitung von Kanten beschrieben. Es ist aber auch ebenso möglich, den Lichtstrahl 3 über die Oberfläche des Werkstücks 1 zu führen, und in die Oberfläche durch Ablösen des Teils 11 eine Vertiefung zu erzeugen. Die Tiefe der Vertiefung entspricht bei einmaliger Bearbeitung der Spanungstiefe. Fig. 3 zeigt dazu eine Anordnung, mit welcher die Seitenfläche 6 eines Werkstücks 1 bearbeitet wird, indem der Lichtstrahl 3 eines Lasers 30 mit einer Geschwindigkeit v_{c} über das Werkstück 1 geführt wird. Durch die aufgrund der lokalen Erwärmung ausgeübten thermomechanischen Spannungen wird ein spanförmiges Teil 11 mit einer Spanungsdicke h aus der Seitenfläche 6 herausgelöst. Die Spanungsdicke h ist dabei auch abhängig von der Geschwindigkeit v_{c} und der Leistung und der Eindringtiefe des Lichtstrahls 3. Dabei kann allgemein, ohne Beschränkung auf die spezielle Ausführungsform nach Fig. 3, vorgesehen sein, dass der Laserstrahl 3 mit einer Geschwindigkeit im Bereich von 5 mm/s bis 500 mm/s, bevorzugt bis 150 mm/s, besonders bevorzugt bis 50 mm/s, in Fortpflanzungsrichtung der Spanablösung über das Werkstück 1 bewegt wird. Auf diese Weise ist eine besonders effiziente und schnelle Bearbeitung des Werkstücks 1 möglich.

Anders als in Fig. 3 gezeigt können mit dem Verfahren ohne Weiteres auch gewölbte oder unebene Flächen von Werkstücken 1 bearbeitet werden. Fig. 4 zeigt dazu als Beispiel ein mit dem Verfahren bearbeitetes Werkstück 1 in Form eines Rohrs 50. In die Mantelfläche 52 des Rohrs 50 ist eine Vertiefung 21 durch das Thermo-Schock-Zerspanungsverfahren eingefügt worden. Auch können wie dargestellt die Stirnseiten des Rohrs 50 angefast werden. Im gezeigten Beispiel ist die Fase 15 nur an der besonders empfindlichen äußeren Mantelfläche 52 des Rohrs 50 eingefügt. Selbstverständlich kann in gleicher Weise aber auch eine Fase 15 an der Stirnseite zur Innenseite des Rohrs 50 hin eingefügt werden.

In der nachfolgenden Tabelle sind die Verfahrensparameter für ein Ausführungsbeispiel dargelegt, bei dem in ein Rohr aus Borosilikatglas Vertiefungen durch Abtrennen von Material mit dem hier beschriebenen Verfahren eingefügt werden:

| | |
|---|---|
| Lasermedium: | CO, Kohlenmonoxid |
| Laserleistung | P=110,5 W |
| Verfahrgeschwindigkeit | 35 mm/s |
| Strahldurchmesser | ca. 6 mm |
| Arbeitsabstand des Werkstücks zur Linse des F-Θ-Scanners | ca. 200 mm |
| Rohrgeometrie: | Durchmesser 95 mm, Wandungsstärke 2,5 mm |

Fig. 4 zeigt ein weiteres Anwendungsbeispiel der Erfindung. In diesem Beispiel wurde ein Werkstück 1 bearbeitet, welches als Bedienblende 51 verwendet wird. Als Beispiel wurden quadratische Vertiefungen 21 und eine ringförmige Vertiefung 22 eingefügt. Die Vertiefungen 21, 22 können dabei als haptische Bedienhilfen dienen, um das tastende Auffinden von Schaltelementen der Bedienblende 51 zu erleichtern. Eine solche Bedienblende 51 kann dabei für Haushaltsgeräte, insbesondere von Küchengeräten, eingesetzt werden, etwa um die Positionen von Berührungsschaltern zu markieren. Auch in Kraftfahrzeugen können solche Bedienblenden 51, beispielsweise als Bestandteil des Armaturenbretts, vorgesehen sein.

Da mit der oberflächlichen Aufheizung lokal sehr hohe Heizraten erreicht werden können, kann das Thermo-Schock-Zerspanungsverfahren gemäß dieser Offenbarung auch auf sprödharte Werkstoffe angewendet werden, die sonst nur schwierig zu bearbeiten sind. So ist allgemein, ohne Beschränkung auf die in den Figuren dargestellten Beispiele, in einer Ausführungsform vorgesehen, dass das Werkstück eine Glaskeramik mit einem Temperaturausdehnungskoeffizienten α₂₀₋₆₀₀ von höchstens 2·10⁻⁶ K⁻¹ ist. Überraschenderweise können selbst bei einem solchen Material hinreichend große thermomechanische Spannungen erzeugt werden. Gemäß noch einer weiteren Ausführungsform ist das Werkstück ein thermisch vorgespanntes Glas. Auch Werkstücke 1 aus diesem Material sind üblicherweise schwer bis gar nicht zu bearbeiten, da die Druckspannungen im Glas bei einer Verletzung der Oberfläche zu einem Bruch des Werkstücks 1 führen. Besonders aber die Kantenbearbeitung, wie etwa das Einfügen einer Fase 15 ist mit dem hier beschriebenen Verfahren leicht möglich.

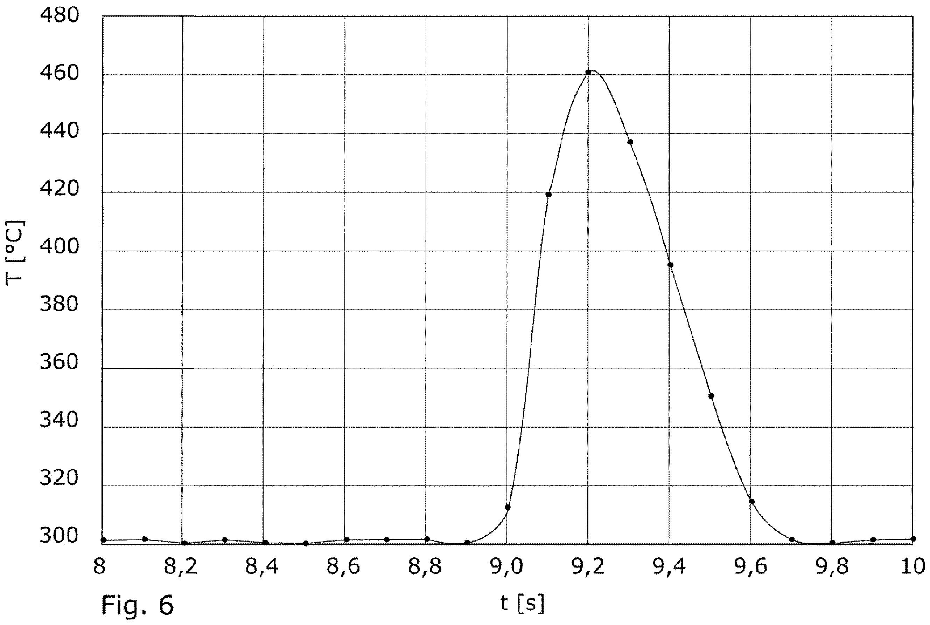

Gemäß einer bevorzugten Ausgestaltung des Verfahrens ist unabhängig vom Material des Werkstücks 1 allgemein vorgesehen, dass das Aufheizen des sprödharten Materials und das nachfolgende Abkühlen an einer vom Lichtstrahl überstrichenen Position der Oberfläche bis auf eine Temperatur von höchstens 20° oberhalb der Temperatur vor dem Aufheizen innerhalb von höchstens zwei Sekunden, vorzugsweise innerhalb von höchstens einer Sekunde, erfolgt. Die schnelle Temperaturänderung, welche auch die Bearbeitung der vorgenannten Werkstoffe ermöglicht, wird anhand des Beispiels der Fig. 6 besonders deutlich. Fig. 6 zeigt den Temperatur-Zeit-Verlauf an einer Messposition auf der Kante eines Werkstücks. Im Messzeitraum läuft dabei der Lichtstrahl 3 zur Erzeugung einer Fase 15 über die Messposition hinweg. Die Messposition stellt dabei den Messort eines Pyrometers dar, mit welchem die Temperatur aufgezeichnet wurde. Wie zu erkennen, ist bereits 0,6 Sekunden nach Beginn des Temperaturanstiegs fast wieder die Ausgangstemperatur erreicht. Der Temperaturanstieg von der Ausgangstemperatur zur Maximaltemperatur beträgt in diesem Beispiel etwa 160 °C. Dabei findet der Temperaturanstieg in einem Zeitintervall von nur etwa 0,2 Sekunden statt. Dies entspricht einer gemittelten Aufheizrate von etwa 800 °C pro Sekunde. Der Messort des Pyrometers lag allerdings neben dem vom Laser überstrichenen Pfad, da ansonsten die vom Glas reflektierte Laserstrahlung die Messung beeinflusst hätte.

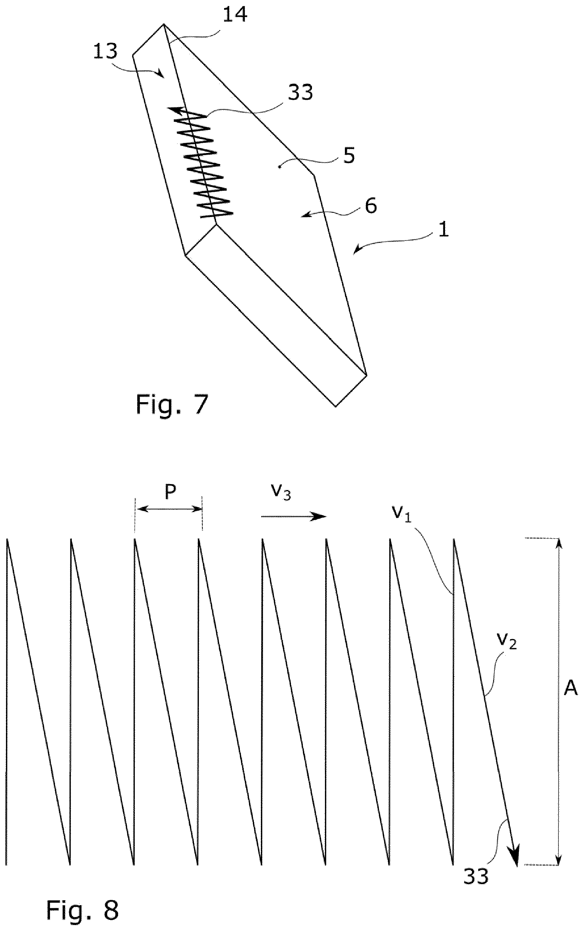

Es ist besonders vorteilhaft, die Strahlungsleistung auf dem Werkstück 1 zu verteilen. Dies ist von Vorteil, um etwa bei der Herstellung einer Fase 15 die Ausbildung einer deutlich konvexen Fläche zu vermeiden, die dann einer Hohlkehle entspricht. Eine solche Fläche hätte verglichen mit einer ebenen oder konvexen Fläche spitzere Ecken und entsprechend empfindlichere Kantenlinien. Gemäß einer Ausführungsform ist daher vorgesehen, dass der Laserstrahl 3 in einem Bewegungsmuster mit einer oszillierenden Bewegungskomponente über die Oberfläche 5 bewegt wird. Dies ist auch dann günstig, wenn der Laserstrahl bereits ein breiteres Intensitätsprofil aufweist, wie es etwa das Beispiel der Fig. 2 zeigt. Besonders bevorzugt wird der Laserstrahl dabei in einer ersten Richtung kontinuierlich über das Werkstück 1 bewegt, während der Laserstrahl 3 in einer dazu senkrechten Richtung eine oszillierende Bewegung ausführt. Ein Beispiel einer solchen Bewegung zeigt Fig. 7. Ähnlich wie bei dem Beispiel der Fig. 1 wird in diesem Beispiel die Kante 13 eines scheibenförmigen Werkstücks 1 bearbeitet, um zur Verbesserung der Kantenstabilität eine Fase einzufügen. Dabei wird der Laserstrahl 3 kontinuierlich entlang der Kantenlinie 14 am Übergang von der Kante 13 zur Seitenfläche 6 bewegt. Gleichzeitig oszilliert der Laserstrahl 3 senkrecht zur Kantenlinie 14 und damit auch senkrecht zur ersten Bewegungskomponente entlang der Kantenlinie 14.

Um einen gleichmäßigen Energieeintrag in dem vom Laserstrahl durch die oszillierende Bewegung überstrichenen Streifen auf der Oberfläche 5 des Werkstücks zu erreichen, ist eine gleichbleibende Geschwindigkeit der oszillierenden Bewegungskomponente während eines Schwenks des Strahls von Vorteil. Aus einer solchen Bewegung ergibt sich in Überlagung ein Zickzack-Pfad oder ein sägezahnförmiger Pfad des Laserstrahls 3 auf dem Werkstück. Ein Beispiel eines Pfad 33, den der Laserstrahl 3 beschreibt, ist in Fig. 7 eingezeichnet. In diesem Beispiel sind die Schwenkbewegungen unterschiedlich schnell, so dass der Laserstrahl 3 einem sägezahnförmigen Pfad 33 folgt.

Fig. 8 zeigt ein Ausführungsbeispiel eines solchen Pfads 33.

Allgemein, ohne Beschränkung auf das dargestellte Beispiel, ist in einer Weiterbildung der Ausführungsform mit oszillierender Bewegung des Laserstrahls 3 vorgesehen, dass die beiden entgegengesetzten Richtungen der oszillierenden Bewegungskomponente der Bewegung des Laserstrahls 3 mit unterschiedlichen Geschwindigkeiten durchlaufen werden. Bei dem in Fig. 8 gezeigten Beispiel ist die Geschwindigkeit v₁ der Bewegung in die eine Richtung wesentlich höher als die Geschwindigkeit v₂ in die entgegengesetzte Richtung. Gleichzeitig wird der Laserstrahl 3 mit einer Geschwindigkeit v₃ in einer zur oszillierenden Bewegung senkrechten Richtung über das Werkstück bewegt. Dadurch ergibt sich wie dargestellt ein sägezahnförmiger Pfad 33 des Laserstrahls 3 mit einer Amplitude A und Periode P der Oszillation. Die Geschwindigkeiten v₁ und v₂ sind auch wie beschrieben gleichförmig. Ist dies nicht der Fall, so bezieht sich die Ausführungsform mit den unterschiedlichen Geschwindigkeiten der entgegengesetzten Richtungen auf die jeweiligen Durchschnittsgeschwindigkeiten. Die Ausführungsform mit unterschiedlich schnellen Bewegungen der Oszillation ist besonders vorteilhaft, weil die Abschnitte mit langsamerer Bewegung, hier mit Geschwindigkeit v₂, zueinander gleiche Abstände haben und bei gleichbleibender Laserleistung einen insgesamt höheren Energieeintrag beisteuern, als die Abschnitte mit höherer Geschwindigkeit v₂. Dies führt insgesamt zu einer über die vom Laserstrahl 3 überstrichene Fläche sehr gleichmäßigen Energiedichte. Die Amplitude der Oszillation muss dabei auch nicht oder zumindest nicht wesentlich größer sein als der Strahldurchmesser des Laserstrahls. So ist gemäß noch einer Weiterbildung dieser Ausführungsform vorgesehen, dass die Amplitude der Oszillation höchstens das 1,5-fache des Strahldurchmessers des Laserstrahls 3 beträgt.

Gemäß einer weiteren Ausführungsform ist vorgesehen, dass die Ablöseposition und die Einstrahlposition zeitlich bzw. örtlich versetzt sind, so dass das Ablösen des Teils 11 an einer bestimmten Ablöseposition erst erfolgt, nachdem der Laserstrahl 3 diese Position überquert hat. Das Ablösen des Teils 11 erfolgt also zeitlich versetzt, sodass zu dem Zeitpunkt des Ablösens der Laserstrahl 3 bereits eine andere Stelle des Werkstücks 1 bestrahlt als die, an welcher das Ablösen erfolgt.

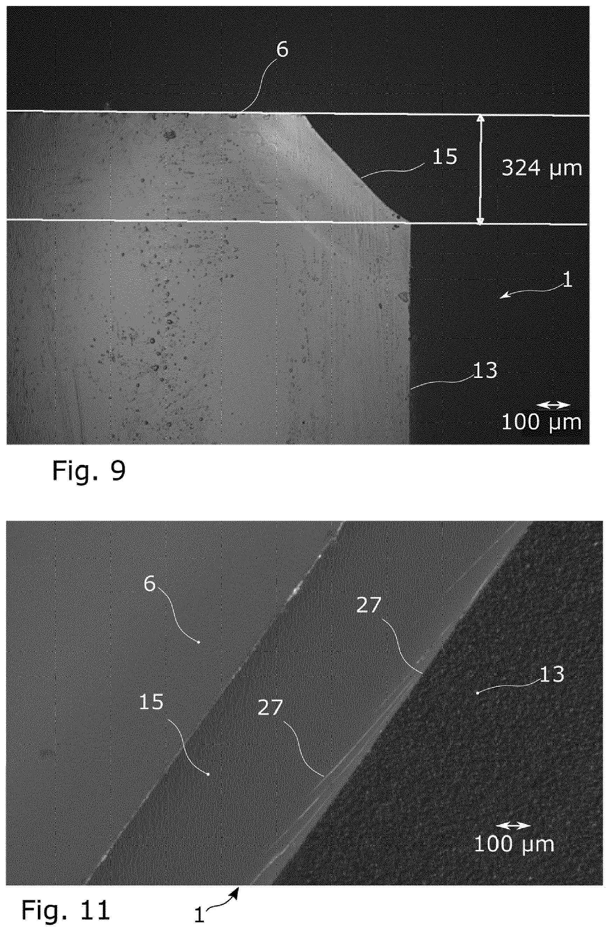

Fig. 9 zeigt eine mikroskopische Aufnahme eines Werkstücks 1 mit einer bearbeiteten Kante 13. Wie anhand von Fig. 1 beschrieben, wurde in die Kante 13 des Werkstücks 1 mit dem hier beschriebenen Verfahren eine Fase 15 eingefügt. In Richtung auf die Kantenfläche betrachtet hat die Fase 15 eine Höhe von etwa 320 µm. Es ist an der geradlinigen Umrisslinie auch zu erkennen, dass die Fase 15 eine im wesentlichen ebene Fläche bildet. Um eine solche Fase 15 herzustellen, wurde wie anhand der Fig. 7, Fig. 8 beschrieben der Laserstrahl 3 entlang der Kante 13 bewegt, der gleichzeitig senkrecht zur Bewegung entlang der Kante senkrecht dazu oszillierende Bewegung ausführt.

Das hier beschriebene Verfahren ist insbesondere in Verbindung mit einem Verfahren zum Auftrennen eines Werkstücks aus sprödhartem Material mit Einfügen einer Vielzahl nebeneinander verlaufender filamentförmiger Schädigungen mittels eines Ultrakurzpulslasers entlang einer vorgesehenen Trennlinie geeignet. Dieses Verfahren ermöglicht ein schnelles und kostengünstiges Zuschneiden von Werkstücken mit wahlfreier Umrissform. Allerdings sind die so hergestellten Kanten recht empfindlich. Es bietet sich hier besonders an, auch das Herstellen von Fasen wiederum, wie gemäß dieser Offenbarung vorgesehen, lasergestützt vorzunehmen.

Demgemäß ist in einer Ausführungsform vorgesehen, dass
- nebeneinander entlang einer Trennlinie filamentförmige Schädigungen im Volumen eines Elements aus sprödhartem Material erzeugt werden,
- die Schädigungen durch Laserpulse eines Ultrakurzpulslasers eingefügt werden, für die das Material des Elements transparent ist,
- die Auftreffpunkte der Laserpulse auf das Element sukzessive nebeneinanderliegend entlang einer Linie, beziehungsweise einer vorgesehenen Trennlinie eingefügt werden,
- nach dem Einfügen der filamentförmigen Schädigungen das Element an der Trennlinie an den nebeneinander liegenden filamentförmigen Schädigungen aufgetrennt wird, so dass ein Werkstück 1 mit einer Kante 13 entlang der Trennlinie hergestellt wird, und
- an der Kante 13 dann zumindest einseitig mit dem hier beschriebenen Verfahren eine Fase 15 eingefügt wird. Typischerweise werden die filamentförmigen Schädigungen im Volumen des Werkstücks durch ein Plasma hervorgerufen, welches durch den intensiven Laserpuls erzeugt wird.

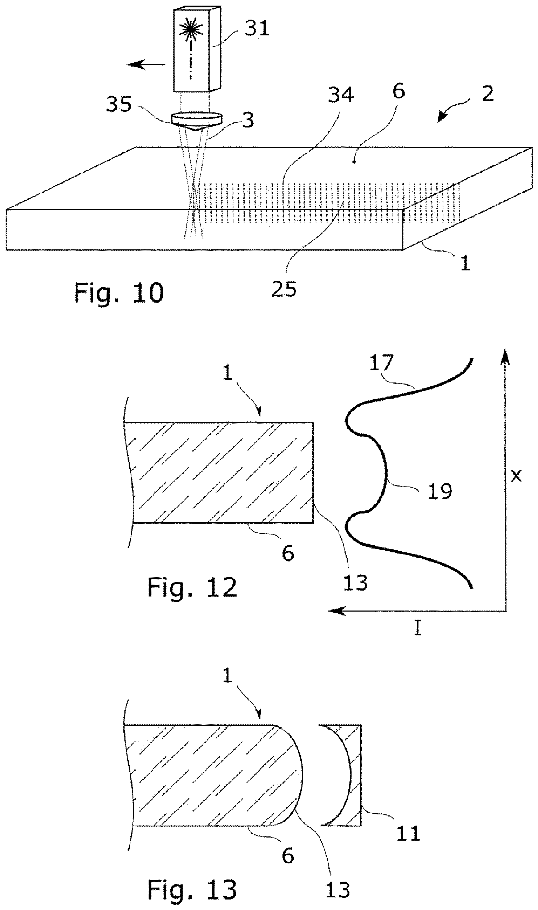

Fig. 10 zeigt eine Anordnung zum Einfügen der filamentförmigen Schädigungen 25 in das Element 2. Der Ultrakurzpulslaser 31 gibt eine gepulsten Laserstrahl 3 ab, der durch eine Linse 35 zu einem langgestreckten, insbesondere linienförmigen, Fokus im Element 2 fokussiert wird. Durch die intensive Strahlung im Fokus wird ein Plasma im Material des Elements 2 erzeugt. Dieses Phänomen wird auch als "optical breakdown" bezeichnet. Das Plasma hinterlässt eine ebenfalls linienförmige, beziehungsweise filamentförmige, Schädigung 25 im Material, die sich in Richtung von einer der Seitenflächen 6 zur gegenüberliegenden Seitenfläche 6 erstreckt. Laser 31 und Element 2 werden während der Laserpuls-Abgabe relativ zueinander bewegt, so dass eine Vielzahl von filamentförmigen Schädigungen nebeneinander in das Element 2 entlang einer Trennlinie 34 eingefügt werden. An dieser Trennlinie 34 kann dann das Element 2 aufgetrennt werden, so dass ein Werkstück 1 der gewünschten Abmessungen erhalten wird. Die an der Trennlinie 34 ausgebildete Kante kann dann mit dem hier beschriebenen Verfahren angefast werden, um die Kante mechanisch robuster gegenüber Beschädigungen zu machen.

Fig. 11 zeigt eine perspektivische Mikroskopaufnahme des Werkstücks 1 (vgl. Fig. 10) mit Betrachtungsrichtung auf die Fase 15. Die Kante 13 des Werkstücks weist, wie zu erkennen ist, eine höhere Rauigkeit auf, als die Seitenfläche 6. Die Kante 13 wurde erzeugt durch das nebeneinander Einfügen filamentförmiger Schädigungen mittels eines Ultrakurzpulslasers entlang einer vorgesehenen Trennlinie und Auftrennen des Werkstücks an der Trennlinie. Das mit dem Verfahren herstellbare Werkstück weist einige charakteristische Merkmale auf. Gut zu sehen sind durch den Trennvorgang entstehende Wallner-Linien 27. Wallner-Linien 27 entstehen durch eine Überlagerung der sich beim Ablösen des Spans fortpflanzenden Trennstelle mit elastischen Wellen im sprödharten Material, die durch das Aufreissen des Materials ausgelöst werden. Die elastischen Wellen haben dabei eine Ausbreitungsgeschwindigkeit die höher ist, als die durch den Vorschub des Laserstrahls 3 bestimmte Vorschubgeschwindigkeit der Trennstelle beziehungsweise Rissfront zwischen abgelöstem Teil 11 und Werkstück 15.

Wie anhand der Aufnahme zu erkennen ist, weisen die Wallner-Linien 27 einen sehr flachen Winkel zur Kantenlinie 14 zwischen der Fase 15 und der Kante 13 auf. Der Winkel beträgt weniger als 20°, vorzugsweise weniger als 10°. Ohne Beschränkung auf das spezielle, in Fig. 11 gezeigte Beispiel ist daher in einer Ausführungsform der Erfindung ein plattenförmiges Werkstück 1 aus sprödhartem Material vorgesehen, welches zwei gegenüberliegende Seitenflächen 6 und eine den Rand des Werkstücks 1 bildende Kante 13 vorgesehen, wobei die Oberfläche der Kante 13 eine höhere Rauigkeit als die Oberfläche der Seitenflächen 6 aufweist, wobei der Übergang von der Kante 13 zu zumindest einer der Seitenflächen 6 durch eine Fase 15 gebildet wird, wobei von der Kantenlinie 14 zwischen der Fase 15 und der Kante 13 ausgehende Wallner-Linien 27 in der Fläche der Fase 15 verlaufen, welche einen Winkel zur Kantenlinie 14 einnehmen, der kleiner als 20° ist. Wie anhand von Fig. 9 zu erkennen ist, kann die Fase 15 wie gesagt weiterhin leicht konkav geformt sein, wobei im Speziellen das Profil der Fase 15 einen konkaven Verlauf aufweist, so dass die konkave Form in der Querschnittansicht wie in Fig. 9 zu erkennen ist. Dementsprechend verläuft der Krümmungsvektor entlang der Längsrichtung der Kante 13. Die maximale Abweichung von einem geradlinigen Profil beträgt aber vorzugsweise, wie auch im dargestellten Beispiel, weniger als 10 µm. Gemäß einer Ausführungsform kann allgemein vorgesehen sein, dass der Laserstrahl 3 unter einem Winkel im Bereich von 0° bis 90° auf die Kante trifft. Dies dient zum Ausrichten der Fase. Weiterhin kann allgemein vorgesehen sein, dass der Laserstrahl 3 mit symmetrischer Intensitätsverteilung versetzt zur Mitte der Schmalseite auf die Kante trifft.

Bei dem Verfahren, wie beispielhaft anhand der Fig. 7 und Fig. 8 erläutert, wird die Leistung des Laserstrahls 3 durch eine oszillierende Bewegung verteilt. Es ist gemäß einer alternativen oder zusätzlichen Ausführungsform der Erfindung auch möglich, dass das Werkstück 1 mit einem Laserstrahl 3 bestrahlt wird, der ein Strahlprofil mit quer zur Strahlrichtung variierender Lichtintensität, insbesondere mit einem Strahlprofil mit einem lokalen Minimum der Lichtintensität aufweist, wobei ein Teil 11 abgelöst wird, dessen lokale Dicke zur lokalen Lichtintensität des Lichtstrahls 3 beziehungsweise zur Leistungsdichte korrespondiert.

Fig. 12 zeigt hierzu ein Beispiel, mit welchem eine besonders geformte Kante 13 eines Werkstücks 1 hergestellt werden soll. Der Laserstrahl wird vorzugsweise senkrecht auf die Kante 13 des Werkstücks 1 eingestrahlt und weist ein aufgeweitetes Strahlprofil 17 mit einem lokalen Minimum 19 auf. Ein aufgeweiteter oder verteilter Strahl kann allgemein vorteilhaft sein, um die Kante 13 in ihrer gesamten Breite zu bearbeiten. Ohne Beschränkung auf das spezielle dargestellte Beispiel ist daher in einer Weiterbildung der Erfindung vorgesehen, dass die Kante 13 des Werkstücks 1 in ihrer gesamten Breite, entsprechend der Dicke des Werkstücks 1, vom Laserstrahl 3 aufgeheizt wird. Dies kann durch entsprechende oszillierende Bewegung des Laserstrahls 3 erfolgen oder durch ein entsprechend aufgeweitetes Strahlprofil. Entsprechend kann dann Teil 11 vom Werkstück 1 in Form eines Streifens mit der Breite der Kante 13 abgelöst werden.

Allgemein korrespondiert die lokale Dicke des abgelösten Teils 11 zur lokalen Strahlintensität. Durch das Minimum 19 im Strahlprofil 17 wird entsprechend auch eine geringere Dicke des abgelösten Teils 11 bewirkt. Fig. 13 zeigt dazu die mit dem ausgedehnten Laserstrahl bearbeitete Kante 13 und das korrespondierende abgelöste Teil 11. Mit dem Strahlprofil mit dem lokalen Minimum kann wie dargestellt eine sogenannte C-Kante erzeugt werden. Diese Kante hat ein abgerundetes Profil und ist besonders unempfindlich gegenüber Beschädigungen. Allgemein, ohne Beschränkung auf das spezielle Beispiel, ist dazu in einer Weiterbildung der Erfindung vorgesehen, dass die Kante 13 des Werkstücks 1 mit einem Laserstrahl mit einer solchen Intensitätsverteilung auf der Oberfläche des Werkstücks 1 bestrahlt wird, dass durch das Ablösen des Teils 11 eine Kante 13 mit abgerundetem Profil erhalten wird. Die räumliche Verteilung kann dabei sowohl durch ein entsprechendes Strahlprofil, als auch durch eine Bewegung, insbesondere eine oszillierende Bewegung des Strahls, erreicht werden.

Es ist dem Fachmann ersichtlich, dass die Erfindung nicht auf die beschriebenen Ausführungsbeispiele beschränkt ist, sondern in vielfältiger Weise im Rahmen des Gegenstands der folgenden Ansprüche variiert werden kann. Insbesondere können auch Ausführungsbeispiele kombiniert werden. So kann eine Kantenbearbeitung, wie sie die Fig. 1 oder Fig. 12 zeigen, mit dem Einfügen von Vertiefungen, wie sie die Fig. 4 oder Fig. 5 darstellen, kombiniert werden. Vertiefungen können auch nicht nur in eine Seitenfläche, sondern je nach Anwendung auch in die Kante eines plattenförmigen Werkstücks 1 eingefügt werden. Weiterhin können auch die Vertiefungen mit einem Laserstrahl 3 mit einer oszillierenden Bewegungskomponente, wie sie die Fig. 7 und Fig. 8 illustrieren, eingefügt werden.

**Bezugszeichenliste**

| | |
|---|---|
| 1 | Werkstück |
| 2 | Element |
| 3 | Laserstrahl |
| 5 | Oberfläche von 1 |
| 6 | Seitenfläche |
| 7 | bestrahlter Bereich |
| 9 | unbestrahlter Bereich |
| 11 | abgelöstes Teil |
| 13 | Kante |
| 14 | Kantenlinie |
| 15 | Fase |
| 17 | Strahlprofil |
| 19 | Minimum von 17 |
| 21 | Vertiefung |
| 22 | ringförmige Vertiefung |
| 25 | filamentförmige Schädigung |
| 27 | Wallner-Linie |
| 30 | Laser |
| 31 | Ultrakurzpulslaser |
| 32 | Scanner |
| 33 | Pfad von 3 auf 1 |
| 34 | Trennlinie |
| 35 | Linse |
| 50 | Rohr |
| 51 | Bedienblende |

## Patentansprüche

1. Verfahren zum trennenden Bearbeiten von sprödharten Materialien, bei welchem die Oberfläche eines Werkstücks (1) aus sprödhartem Material mit einem Laserstrahl (3) bestrahlt wird, wobei die Wellenlänge des Laserstrahls (3) so gewählt wird, dass das Licht an der Oberfläche (5) des Werkstücks (1) absorbiert wird, so dass das Werkstück (1) an der Oberfläche (5) erhitzt wird und sich ein Temperaturgradient in Richtung von der Oberfläche (5) in das Innere des Werkstücks (1) ausbildet, wobei der Laserstrahl (3) über die Oberfläche (5) des Werkstücks (1) geführt wird, und wobei ein weiterer Temperaturgradient entlang der Oberfläche (5) zwischen einem bestrahlten Bereich (7) und einem benachbarten unbestrahlten Bereich (9) entsteht, wobei die beiden Temperaturgradienten so zusammenwirken, dass sich aufgrund der durch die Temperaturgradienten verursachten thermomechanischen Spannungen das Werkstück unterhalb der Oberfläche (5) auftrennt und ein Teil (11) des Werkstücks (1), insbesondere in Form eines Spans, abgetrennt wird.

2. Verfahren gemäß dem vorstehenden Anspruch, **dadurch gekennzeichnet, dass** ein Werkstück (1) aus Glas oder Glaskeramik bearbeitet wird.

3. Verfahren gemäß dem vorstehenden Anspruch, **dadurch gekennzeichnet, dass** das Material des Werkstücks (1), welches bearbeitet wird, eine der folgenden Eigenschaften aufweist:
- das Werkstück ist eine Glaskeramik mit einem Temperaturausdehnungskoeffizienten α₂₀₋₆₀₀ von höchstens 2·10⁻⁶ K⁻¹,
- das Werkstück ist ein thermisch vorgespanntes Glas.

4. Verfahren gemäß einem der vorstehenden Ansprüche, **dadurch gekennzeichnet, dass** das Werkstück (1) eine Kante (13) aufweist, wobei der Lichtstrahl (3) an der Kante (13) entlang geführt wird, so dass durch das Ablösen des Teils (11) eine Fase (15) an der Kante (13) gebildet wird.

5. Verfahren gemäß dem vorstehenden Anspruch, **dadurch gekennzeichnet, dass**:
- nebeneinander entlang einer Trennlinie filamentförmige Schädigungen (25) im Volumen eines Elements (2) aus sprödhartem Material erzeugt werden,
- die filamentförmigen Schädigungen (25) durch Laserpulse eines Ultrakurzpulslasers (31) eingefügt werden, für die das Material des Elements (2) transparent ist,
- die Auftreffpunkte der Laserpulse auf das Element (2) sukzessive nebeneinanderliegend entlang einer Trennlinie (34) eingefügt werden,
- nach dem Einfügen der filamentförmigen Schädigungen (25) das Element (2) an der Trennlinie an den nebeneinander liegenden filamentförmigen Schädigungen (25) aufgetrennt wird, so dass ein Werkstück (1) mit einer Kante (13) entlang der Trennlinie (34) hergestellt wird, und
- an der Kante (13) dann eine Fase (15) eingefügt wird.

6. Verfahren gemäß einem der vorstehenden Ansprüche, **dadurch gekennzeichnet, dass** für den Laserstrahl zumindest eines der folgenden Merkmale gilt:
- der Laserstrahl weist eine Wellenlänge von mindestens 4,5 µm auf,
- der Laserstrahl (3) wird mit einem CO₂-Laser oder einem CO-Laser erzeugt,
- der Laserstrahl (3) hat einen Durchmesser zwischen 1 mm, bevorzugt zwischen 5 mm, und 15 mm.

7. Verfahren gemäß einem der vorstehenden Ansprüche, **dadurch gekennzeichnet, dass** der Laserstrahl (3) mit einer Geschwindigkeit im Bereich von 5 mm/s bis 500 mm/s, bevorzugt bis 150 mm/s, besonders bevorzugt bis 50 mm/s, in Fortpflanzungsrichtung der Spanablösung über das Werkstück (1) bewegt wird.

8. Verfahren gemäß einem der vorstehenden Ansprüche, **dadurch gekennzeichnet, dass** der Laserstrahl (3) in einem Bewegungsmuster mit einer oszillierenden Bewegungskomponente über die Oberfläche (5) bewegt wird.

9. Verfahren gemäß dem vorstehenden Anspruch, **dadurch gekennzeichnet, dass** der Laserstrahl (3) in in einer ersten Richtung kontinuierlich über das Werkstück (1) bewegt wird, während der Laserstrahl (3) in einer dazu senkrechten Richtung eine oszillierende Bewegung ausführt.

10. Verfahren gemäß einem der beiden vorstehenden Ansprüche, **gekennzeichnet durch** zumindest eines der folgenden Merkmale:
- der Laserstrahl wird während eines Schwenks der oszillierenden Bewegungskomponente mit gleichbleibender Geschwindigkeit geführt,
- die beiden entgegengesetzten Richtungen der oszillierenden Bewegungskomponente der Bewegung des Laserstrahls (3) werden mit unterschiedlichen Geschwindigkeiten durchlaufen,
- die Amplitude der Oszillation beträgt höchstens das 1,5-fache des Strahldurchmessers des Laserstrahls (3).

11. Verfahren gemäß einem der vorstehenden Ansprüche, **dadurch gekennzeichnet, dass** die Ablöseposition und die Einstrahlposition örtlich versetzt sind, so dass das Ablösen des Teils (11) an einer bestimmten Ablöseposition erst erfolgt, nachdem der Laserstrahl (3) diese Position überquert hat.

12. Verfahren gemäß einem der vorstehenden Ansprüche, **dadurch gekennzeichnet, dass** das Werkstück (1) mit einem Laserstrahl (3) bestrahlt wird, der ein Strahlprofil (17) mit quer zur Strahlrichtung variierender Lichtintensität, insbesondere mit einem Strahlprofil (17) mit einem lokalen Minimum (19) der Lichtintensität, aufweist, wobei ein Teil (11) abgelöst wird, dessen lokale Dicke zur lokalen Lichtintensität des Lichtstrahls (3) korrespondiert.

13. Verfahren gemäß einem der vorstehenden Ansprüche, **dadurch gekennzeichnet, dass** die Kante (13) des Werkstücks (1) in ihrer gesamten Breite vom Laserstrahl (3) aufgeheizt und ein Teil (11) vom Werkstück (1) in Form eines Streifens mit der Breite der Kante (13) abgelöst wird.

14. Verfahren gemäß einem der vorstehenden Ansprüche, **dadurch gekennzeichnet, dass** die Kante (13) des Werkstücks (1) mit einem Laserstrahl (3) mit einer solchen Intensitätsverteilung auf der Oberfläche des Werkstücks (1) bestrahlt wird, dass durch das Ablösen des Teils (11) eine Kante (13) mit abgerundetem Profil erhalten wird.

15. Verfahren gemäß einem der vorstehenden Ansprüche, **dadurch gekennzeichnet, dass** das Aufheizen des sprödharten Materials und das nachfolgende Abkühlen an einer vom Lichtstrahl überstrichenen Position der Oberfläche bis auf eine Temperatur von höchstens 20° oberhalb der Temperatur vor dem Aufheizen innerhalb von höchstens zwei Sekunden, vorzugsweise innerhalb von höchstens einer Sekunde erfolgt.

16. Verfahren gemäß einem der vorstehenden Ansprüche, **dadurch gekennzeichnet, dass** der Laserstrahl (3) über die Oberfläche (6) des Werkstücks (1) geführt wird, und in die Oberfläche (6) durch Ablösen des Teils (11) eine Vertiefung (21) erzeugt wird.

17. Verfahren gemäß einem der vorstehenden Ansprüche, **dadurch gekennzeichnet, dass** das Werkstück (1) vor dem Bestrahlen mit dem Laserstrahl auf eine Temperatur von mindestens 100 °C, vorzugsweise auf eine Temperatur von mindestens 200 °C aufgeheizt wird.

18. Verfahren nach einem der vorhergehenden Ansprüche, wobei der Laserstrahl unter einem Winkel im Bereich von 0° bis 90° auf die Kante trifft.

19. Verfahren nach einem der vorhergehenden Ansprüche, wobei ein Laserstrahl mit symmetrischer Intensitätsverteilung versetzt zur Mitte der Schmalseite auf die Kante trifft.

20. Plattenförmiges Werkstück (1) aus sprödhartem Material, welches zwei gegenüberliegende Seitenflächen (6) und eine den Rand des Werkstücks (1) bildende Kante (13) aufweist, wobei die Oberfläche der Kante (13) eine höhere Rauigkeit als die Oberfläche der Seitenflächen (6) aufweist, wobei der Übergang von der Kante (13) zu zumindest einer der Seitenflächen (6) durch eine Fase (15) gebildet wird, wobei von der Kantenlinie (14) zwischen der Fase (15) und der Kante (13) ausgehende Wallner-Linien (27) in der Fläche der Fase (15) verlaufen, welche einen Winkel zur Kantenlinie (14) einnehmen, der kleiner als 20° ist.

21. Werkstück (1) gemäß dem vorstehenden Anspruch, **dadurch gekennzeichnet, dass** das Profil der Fase (15) einen konkaven Verlauf aufweist, wobei die maximale Abweichung von einem geradlinigen Profil vorzugsweise weniger als 10 µm beträgt.
